(19) Europäisches Patentamt
European Patent Office
Office européen des brevets

(11) Numéro de publication : **0 566 493 A1**

(12) **DEMANDE DE BREVET EUROPEEN**

(21) Numéro de dépôt : **93400985.3**

(22) Date de dépôt : **15.04.93**

(51) Int. Cl.$^5$ : **C09K 3/32,** G21F 9/00

(30) Priorité : **17.04.92 FR 9204790**

(43) Date de publication de la demande :
**20.10.93 Bulletin 93/42**

(84) Etats contractants désignés :
**BE CH DE ES GB LI**

(71) Demandeur : **COMMISSARIAT A L'ENERGIE ATOMIQUE**
**31-33, rue de la Fédération**
**F-75015 Paris (FR)**

(72) Inventeur : **Jouve, André**
**38, avenue des Faurys**
**F-13770 Venelles (FR)**
Inventeur : **Mary, Naoll**
**12, rue Bichier**
**F-64480 Ustaritz (FR)**

(74) Mandataire : **Dubois-Chabert, Guy et al**
**c/o BREVATOME 25, rue de Ponthieu**
**F-75008 Paris (FR)**

(54) **Procédé de décontamination de la couche superficielle d'un sol recouvert de particules polluantes et solution de décontamination.**

(57) L'invention concerne un procédé de décontamination de la couche superficielle d'un sol recouvert de particules polluantes, notamment radioactives, ainsi qu'une solution de décontamination.

Le but de l'invention est de réaliser un procédé de décontamination peu coûteux, facile à mettre en oeuvre et ne dégradant que faiblement la surface du sol traitée.

Ce but est atteint à l'aide du procédé consistant à :

— épandre sur le sol (2) une solution (6) d'une poudre micronisée de polyacrylamide anionique, réticulé, de formule :

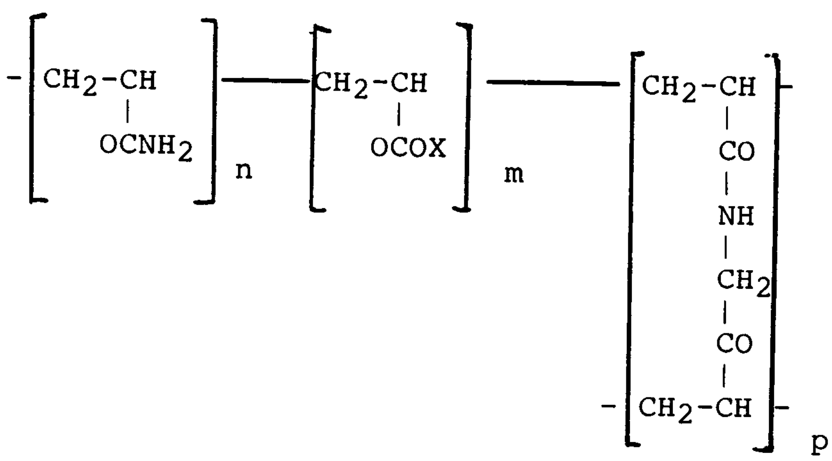

X représente le cation $Na^+$ ou $K^+$ et n, m et p les pourcentages respectifs de chaque maille élémentaire,

— la laisser sécher jusqu'à obtenir un film sec (7),

— réhydrater le film (7) par aspersion d'eau (8),

— récupérer la pellicule formée par le film (7) lié aux particules de sol (2) et aux particules polluantes (4), grâce à des moyens de nettoyage.

EP 0 566 493 A1

Jouve, 18, rue Saint-Denis, 75001 PARIS

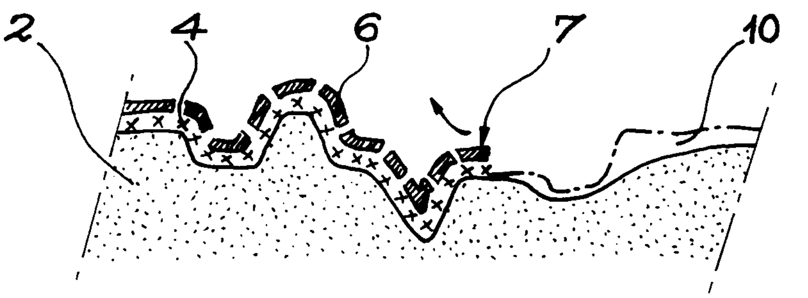


FIG. 1d

La présente invention concerne un procédé de décontamination de la couche superficielle d'un sol recouvert de particules polluantes, ainsi qu'une solution de décontamination.

Après l'accident survenu dans la centrale nucléaire de Tchernobyl, on a pu constater que de très nombreuses particules polluantes radioactives s'étaient déposées sous forme de poussières sur les terres entourant la centrale. Les particules radioactives ayant généralement une demi-vie très importante, les surfaces des sols sont polluées pour de très longues périodes et ces sols doivent être interdits au public. Ceci est en outre renforcé par le fait que les pluies tombant sur le sol, ont tendance à entraîner en profondeur ces particules radioactives et qu'il devient alors impossible de décontaminer le sol pollué.

Par ailleurs, lors du fonctionnement normal des centrales nucléaires, des accidents mineurs surviennent parfois au cours du transport ou des manipulations de particules radioactives et conduisent à des pollutions localisées. Ces pollutions ont généralement lieu sur une surface en béton, à l'intérieur de la centrale.

Enfin, des pollutions de nature non radioactive peuvent survenir, par exemple dans des usines utilisant des métaux lourds toxiques comme le plomb.

Dans les trois cas qui viennent d'être cités, les particules polluantes se présentent sous forme de poussières, de fines particules ou de gouttelettes.

On connait déjà d'après l'art antérieur, plusieurs techniques de décontamination des sols pollués.

Une première technique employée en cas de pollution sur une surface de terre, consiste à utiliser une pelle mécanique connue sous le terme anglais de "scraper" et permettant de racler en surface entre 5 et 10 cm de terre, afin d'éliminer les particules polluantes qui se sont déposées en surface. Cette technique présente toutefois l'inconvénient de créer des quantités de déchets très importantes dues aux énormes quantités de terre qu'il est nécessaire de retirer du sol, alors qu'un simple balayage en surface sur quelques centimètres ou millimètres d'épaisseur suffirait à éliminer les particules polluantes.

Une deuxième technique employée également lors de pollution sur une surface de terre, consiste à enfouir les particules radioactives sous une couche de mousse de polyuréthane ou une couche d'asphalte. Cette technique permet d'éviter que les particules radioactives ne soient déplacées par le vent, vers d'autres surfaces qui n'étaient pas jusqu'alors contaminées. Toutefois, elle ne résout pas le problème de la décontamination des sols touchés. Si l'on souhaite néanmoins décontaminer le sol, il faut alors arracher ces couches d'asphalte ou de polyuréthane.

Une troisième technique consiste à faire pousser sur les surfaces de terre entourant une usine, des herbes dont les racines s'étendent principalement en surface, à quelques centimères de profondeur. En cas de pollution par accident ou explosion à l'intérieur de cette usine, il est alors possible d'arracher cette couche d'herbe dont les racines entraînent les particules de terre sur lesquelles sont fixées les particules polluantes. Là encore, on constate que les deux techniques précitées de décontamination génèrent beaucoup de déchets.

Une quatrième solution employée principalement lors des pollutions sur des surfaces en béton, consiste à utiliser des solutions acides pour rincer le béton. Au pire, il est même possible de casser le béton pollué au marteau-piqueur et d'éliminer les débris. Toutefois, ces dernières solutions ne sont pas satisfaisantes, car elles sont généralement beaucoup trop coûteuses ou difficiles à mettre en oeuvre, voir notamment "International Atomic Energy Agency-Cleanup of Large Areas Contamined as a Result of a Nuclear Accident-(nettoyage de grandes zones contaminées après un accident nucléaire), IAEA, Vienne, 1989, Technical Reports, series n° 300".

En conséquence, l'invention a pour but de remédier à ces inconvénients.

A cet effet, l'invention concerne un procédé de décontamination de la couche superficielle d'un sol, recouvert par des particules polluantes.

Selon les caractéristiques de l'invention, ce procédé consiste à :

- mettre en solution une poudre micronisée de polyacrylamide anionique, réticulé, de formule générale :

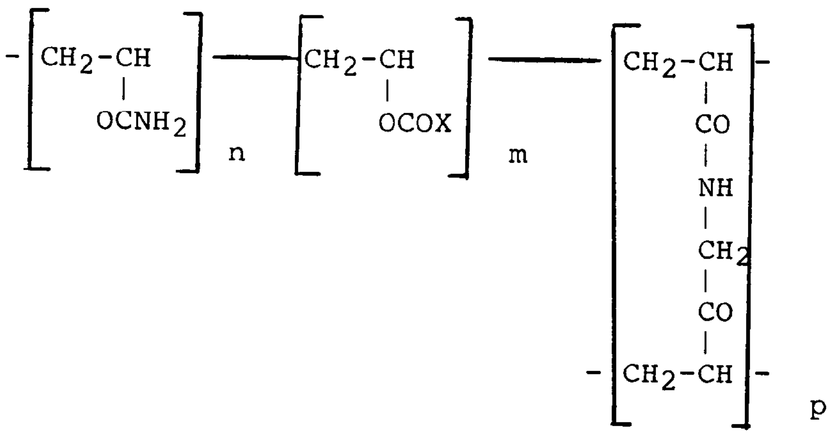

dans laquelle X représente le cation $Na^+$ ou $K^+$ et n, m et p les pourcentages respectifs de chaque maille élémentaire,

de façon à former une solution de décontamination,

- épandre cette solution de décontamination par aspersion du sol à traiter,
- laisser sécher la surface traitée jusqu'à obtenir en surface, un film de polyacrylamide sec,
- réhydrater le film obtenu par aspersion d'eau, de façon à le ramollir, et
- récupérer la pellicule réhydratée formée par la couche de polyacrylamide liée aux particules de sol et aux particules polluantes, grâce à des moyens de nettoyage.

Ce procédé utilise les bonnes capacités d'absorption et d'adhésion du polyacrylamide précité, qui agit comme un adhésif classique vis-à-vis des particules de sol et des particules polluantes. Contrairement à ce qui existait dans l'art antérieur, ce procédé est peu coûteux, facile à mettre en oeuvre et permet, lorsqu'il est réalisé sur une surface de terre, de n'enlever que la couche superficielle de celle-ci, sur une profondeur de quelques millimètres et non pas sur une dizaine de centimètres d'épaisseur, comme avec les systèmes mécaniques de l'art antérieur.

Enfin, et pour autant que ce procédé soit effectué immédiatement après la pollution, il permet de capturer les particules polluantes à l'intérieur du film formé. Ces particules ne peuvent plus être entraînées par le vent ou par les pluies tombant sur le film avant que celui-ci ne soit ramassé.

De façon avantageuse, dans la formule du polyacrylamide précité, X est le cation $Na^+$ et n est égal à 0,7, m à 0,3 et p à 0,0015.

Selon un premier mode de réalisation, la solution de décontamination est aqueuse. Cette solution est donc extrêmement facile à préparer.

Toutefois, dans certains cas spécifiques, la solution de décontamination est une solution saline à base de KCl ou de $NH_4OH$.

En effet, on a pu constater que la solution de polyacrylamide est fortement anionique et que les sites anioniques constitués par les groupes carboxyliques $-CO^-_2$ fixent très facilement les cations. On utilise donc généralement cette solution lorsque les particules polluantes sont des cations et notamment des particules radioactives de césium $Cs^+$ ou de strontium $Sr^{++}$ou un mélange des deux.

Enfin, de préférence, les moyens de nettoyage sont constitués par des moyens de brossage et plus spécifiquement par une balayeuse motorisée. Ceci permet de réaliser le procédé au stade industriel.

Par ailleurs, l'invention concerne également une solution de décontamination destinée notamment a être appliquée sur des sols pollués. Cette solution de décontamination comprend une solution aqueuse ou saline d'une poudre micronisée de polyacrylamide ionique, réticulé, de formule générale :

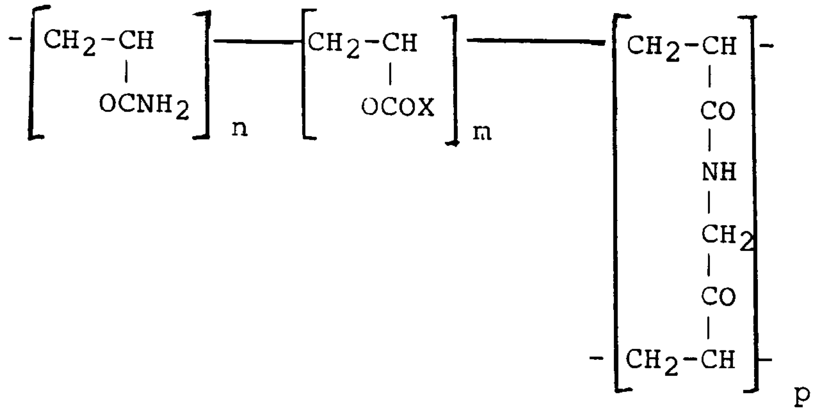

dans laquelle X représente le cation $Na^+$ ou $K^+$, et n, m et p les pourcentages respectifs de chaque maille élémentaire.

La présente invention sera mieux comprise à la lecture de la description suivante d'un mode de réalisation de l'invention donné à titre d'exemple illustratif et non limitatif, cette description étant faite en faisant référence aux dessins joints dans lesquels :

- les figures 1a à 1d représentent les étapes successives du procédé selon l'invention.

Comme illustré en figure 1a, le sol 2 a été recouvert accidentellement de particules polluantes 4. Ce sol 2 peut être par exemple, un sol meuble tel qu'une surface de terre cultivée ou non, un sol sablonneux, limoneux ou argileux ou au contraire un sol dur tel qu'un chemin de terre tassée, une surface bitumée ou une surface bétonnée.

Les particules polluantes 4 peuvent être de toutes natures. Ce sont par exemple, des anions ou des cations, des particules radioactives, notamment le césium ou le strontium ou des particules métalliques telles que des métaux lourds, comme le plomb.

La première étape du procédé selon l'invention consiste à préparer une solution de décontamination 6 (voir figure 1b). Cette solution de décontamination est formée à partir d'une poudre micronisée de polyacrylamide anionique, réticulé, de formule :

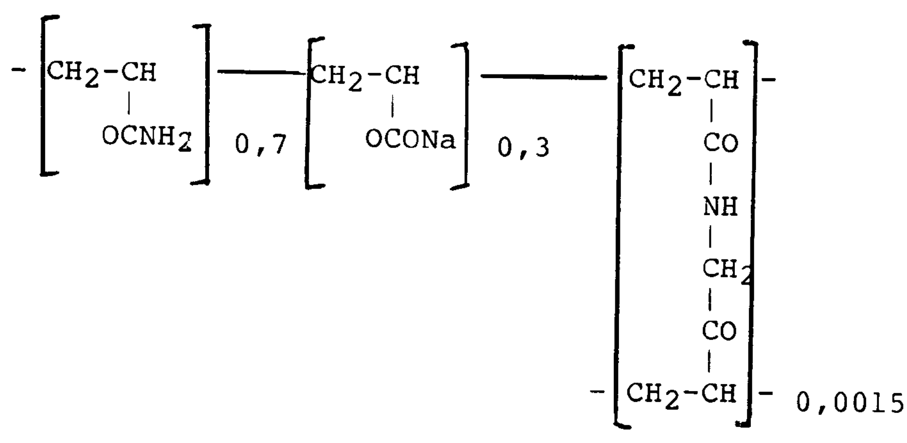

que l'on a dissoute dans de l'eau ou une solution saline.

Dans le cas d'une solution aqueuse, la concentration en poudre du polyacrylamide précité est comprise entre environ 0,1 et 2 % en masse. Dans le cas où on réalise une solution saline, on utilise de préférence une solution 0,5 M de KCl ou de $NH_4OH$, dans laquelle on introduit la poudre du polyacrylamide selon une concentration comprise entre environ 3 et 10 % en masse.

De préférence, et pour que la poudre se dissolve bien, le diamètre des grains de poudre de polyacrylamide est compris entre environ 50 μm et 200 μm. L'agitation doit être vigoureuse pour obtenir une bonne homogénéisation. L'utilisation de grains de granulométrie plus élevée ne permettrait pas la formation du film. On n'obtiendrait donc pas les propriétés de décontamination intéressantes, mentionnées ci-dessus.

Comme illustré en figure 1b, on verse cette solution de décontamination 6 sur la surface du sol 2 pollué, de façon à avoir de préférence une concentration d'au moins 13 g environ de polyacrylamide par mètre carré

de sol 2 à décontaminer. En dessous de cette valeur, le rendement de décontamination diminue. Même s'il n'y a pas de limite supérieure, on a constaté qu'au-delà de 16 à 19 g/m$^2$ de polyacrylamide, le rendement n'augmentait plus.

On a constaté que le polyacrylamide anionique précité, présentait d'une part, de bonnes propriétés d'adhésion aux particules polluantes et d'autre part, des propriétés d'adsorption, c'est-à-dire une très bonne capacité à fixer des cations, par exemple les cations radioactifs tels que le césium ou le strontium. Cette fixation des cations s'effectue au niveau des groupements anioniques formés par les chaînes carboxyliques $CO_2$ de ce polyacrylamide.

Ces propriétés conjuguées d'adhésion et d'adsorption expliquent les grandes capacités de décontamination de la solution selon l'invention.

En outre, cette solution est suffisamment liquide pour mouiller totalement la surface du sol sur lequel elle est répandue. La solution de décontamination 6 se répand, même dans les plus faibles interstices du sol. On a donc une grande surface de contact entre la solution de décontamination 6 et la surface irrégulière du sol 2. Cette représentation irrégulière de la surface du sol a toutefois été accentuée sur les figures, à des fins explicatives. Elle correspond à ce que l'on observe à l'échelle microscopique.

De plus, lorsque la solution de décontamination est sous forme de solution saline, à base de KCl ou de $NH_4OH$, on a pu constater une intéressante réaction d'échange d'ions entre le polyacrylamide et la surface à décontaminer. Cette réaction chimique est la suivante :

$$\underset{(I)}{[A]-M+P-Y} \longrightarrow \underset{(II)}{[A]-Y+P-M}$$

dans laquelle P représente le site anionique du polyacrylamide, Y le cation de la solution saline, par exemple $K^+$ ou $NH_4^+$, et [A] les complexes adsorbants du sol 2 ou de la surface à décontaminer qui ont tendance à fixer le cation polluant M. Ces complexes [A] sont par exemple les colloïdes argileux du sol ou les groupements carboxyliques du bitume.

Dans l'état (I), le sol fixe les particules polluantes et on ajoute la solution saline de polyacrylamide. Cette solution a pour effet de déplacer l'équilibre existant de l'état (I) vers l'état (II) et de conduire à un échange d'ions au cours duquel le site anionique P du polyacrylamide fixe le cation M polluant, tandis que le complexe absorbant du sol fixe le cation compétitif Y de la solution saline.

Comme illustrée en figure 1b, on laisse ensuite sécher le film de polyacrylamide 7 obtenu. Les particules polluantes sont donc fixées sur le film de polyacrylamide 7, et même si la suite des étapes du procédé n'est pas effectuée immédiatement, ceci permet d'éviter que les particules polluantes soient éliminées par l'érosion éolienne ou éventuellement soient entraînées par les pluies.

Comme illustré en figure 1c, on réhydrate ensuite le film de polyacrylamide 7 obtenu, par aspersion d'eau 8, afin de ramollir et de fractionner celui-ci. De façon avantageuse, la réhydratation du film est réalisée en aspergeant celui-ci avec 2,5 à 3,5 l d'eau environ, par mètre carré de film traité. Toutefois, ces valeurs peuvent varier en fonction de la saison et du degré d'humidité de l'air ambiant.

Enfin, la dernière étape du procédé illustré en figure 1d, consiste à utiliser des moyens de nettoyage ou de brossage (non représentés) pour éliminer les morceaux de film 7 de polyacrylamide liés aux particules superficielles de sol 2 et aux particules polluantes 4. Sur cette figure, on constate que seule la couche superficielle 10 du sol est enlevée. De façon avantageuse, les moyens de brossage sont constitués par une balayeuse motorisée et les déchets obtenus peuvent être récoltés à l'aide d'un camion aspirateur. On obtient ainsi des taux d'élimination des particules polluantes très intéressants et fonction de la nature des sols et des dépôts. Ce procédé est donc bien adapté au décapage de sols agricoles et peut s'effectuer à grande échelle.

On a effectué plusieurs expériences visant à montrer les rendements de décontamination obtenus sur différents types de sols.

**EXEMPLE 1** : Décontamination d'un sol agricole

On a établi les rendements de décontamination en laboratoire, après avoir simulé un dépôt accidentel de particules radioactives telles que le césium ou le strontium sur des sols agricoles secs. Ces rendements de décontamination ont été établis sur différents types de sols dont les caractéristiques sont données dans le tableau 1 ci-dessous.

TABLEAU 1

| | sol sableux | sol limoneux | sol argileux |
|---|---|---|---|
| Cailloux > 2 mm % | 0,0 | 0,0 | 0,0 |
| Sables % | 82,0 | 23,0 | 9,0 |
| Limons % | 10,0 | 51,0 | 37,0 |
| Argiles % | 8,0 | 26,0 | 54,0 |
| pH eau | 7,9 | 8,1 | 7,5 |
| Calcaire total % | 0,0 | 46,0 | 0,0 |
| Matière organique % | 1,0 | 2,0 | 10,0 |
| C.E.C. méq/kg | 90,0 | 80,0 | 250,0 |
| Humidité à saturation | 40,0 | 30,0 | 70,0 |

* C.E.C. : capacité d'échange cationique

Plus les sols ont une capacité d'échange cationique élevée et plus ils ont tendance à fixer les particules polluantes, ceci est notamment le cas des sols argileux.

On a ensuite procédé à l'application d'une solution aqueuse 6 de poudre du polyacrylamide selon l'invention, présentant une concentration de 0,7 % en masse. Cette application a été faite à raison de 13 g de polyacrylamide par mètre carré de sol traité.

Trois mesures ont été effectuées sur ces sols contaminés par le césium $^{134}Cs$ et par le strontium $^{85}Sr$, déposés sous forme d'aérosols secs. Les rendements de décontamination R, obtenus après avoir effectué la moyenne des trois mesures, sont donnés dans le tableau 2.

**TABLEAU 2**

| | Rendement R en strontium % | Rendement R en césium % |
|---|---|---|
| sol sableux | 56,5 | 68,4 |
| sol limoneux | 56,7 | 72,6 |
| sol argileux | 62,6 | 77,0 |

On peut donc constater que les rendements sont globalement compris entre 55 et 80 %, après une seule application de la solution de décontamination, ce qui est un excellent résultat comparé aux techniques de l'art antérieur et à la faible épaisseur de terre enlevée, donc à la faible quantité de déchets. En outre, il faut noter que, si, après élimination de la première couche, on constate en mesurant la radioactivité qu'il reste encore une certaine quantité de particules radioactives, il est toujours possible et facile de répéter le procédé selon l'invention.

A titre comparatif, les techniques de l'art antérieur (et notamment l'enlèvement du sol sur une dizaine de centimètres) permettaient également d'avoir un rendement de 75% mais engendraient une quantité de déchets très importante.

**EXEMPLE 2 :** Décontamination d'un sol bitumé

On a simulé en laboratoire le dépôt accidentel de particules radioactives $^{134}CS$ et $^{85}Sr$, sur un sol bitumé. On a appliqué une solution de décontamination selon l'invention, préparée dans une solution saline de $NH_4$ à 0,5 M et à raison de 5 % de polyacrylamide en masse. Le rendement de décontamination a été calculé sur la base d'une seule mesure et ces résultats sont reportés dans le tableau 3.

**TABLEAU 3**

| | RENDEMENT R |
|---|---|
| $^{134}Cs$ | 20 % |
| $^{85}Sr$ | 31 % |

**EXEMPLE 3 :** Lutte contre l'érosion par les pluies

On a préparé une solution de décontamination aqueuse, comprenant 0,7 % de polyacrylamide en masse. On a aspergé le sol à traiter avec cette solution à raison de 13 g de polyacrylamide par mètre carré de surface à traiter. On a effectué cette opération sur un sol pollué artificiellement avec du césium $^{134}Cs$ et du strontium $^{85}Sr$. Après avoir laissé sécher le film de polyacrylamide obtenu, on a mesuré la quantité de césium et de strontium entraînée par l'érosion d'une pluie artificielle de 14 mm durant une minute. On a pu constater que la quantité de césium et de strontium entraînée par cette pluie était inférieure à 10 %, alors qu'en l'absence du film de polyacrylamide, cette même pluie aurait entraîné 59 % du césium et 35 % du strontium présents initialement sur le sol pollué. Ceci confirme que, même si le ramassage du film de polyacrylamide n'est pas effectué immédiatement après un accident nucléaire, le fait de déposer cette pellicule de polyacrylamide permet de stopper la pollution radioactive et d'éviter une pollution ultérieure des rivières.

**EXEMPLE IV** : Lutte contre l'érosion éolienne

Ces essais ont été effectués sur un sol sableux tamisé à 2 mm et pollué artificiellement par un dépôt d'aérosol sec de $^{85}Sr$ et de $^{134}Cs$. Par ailleurs, on a préparé une solution de décontamination 6 identique à celle de l'exemple 3, c'est-à-dire comprenant 0,7 % de polyacrylamide en masse, avec laquelle on a aspergé la moitié du sol à raison de 13 g/m$^2$. L'autre moitié du sol sert de témoin.

Deux gammes de vitesses de vent ont été testées durant 5 minutes. Compte tenu du relief du sol, il est en effet impossible d'avoir une vitesse simulée constante durant toute l'expérience.

Les résultats obtenus sont donnés dans le tableau 4.

TABLEAU 4

| Type de vent | Vent faible $6,5 < V < 10\ m.s^{-1}$ soit environ $23 < V < 35\ km.s^{-1}$ | | | | Vent fort $10 < V < 20\ m.s^{-1}$ soit environ $35 < V < 70\ km.s^{-1}$ | | | |
|---|---|---|---|---|---|---|---|---|
| Traitement | témoin | | avec solution 6 | | témoin | | avec solution 6 | |
| | $^{85}Sr$ | $^{134}Cs$ | $^{85}Sr$ | $^{134}Cs$ | $^{85}Sr$ | $^{134}Cs$ | $^{85}Sr$ | $^{134}Cs$ |
| RS (Bq) | 555 | 1360 | 566,5 | 1370 | 614 | 1540 | 849,5 | 2095 |
| RR (Bq) | 127 | 310 | 5,5 | 10 | 888 | 2070 | 4,5 | 16 |
| $\Lambda(10^{-5}.s^{-1})$ | 62 | 61,8 | 3,2 | 2,4 | 197 | 191 | 1,75 | 2,5 |

RS correspondant à la radioactivité restant sur le sol après l'expérience et RR à la radioactivité récupérée par le système d'aspiration, c'est-à-dire celle remise en suspension. On en déduit le facteur de resuspension :

$$\Lambda(s^{-1}) = (RR(Bq))/t(s)\ .\ 1/(RT(Bq))$$

avec t=5 minutes, soit 300 s et RT représentant la radioactivité totale soit la somme de RR et RS d'où :

$$\Lambda(S^{-1}) = (RR(Bq)/300\ [RR+RS]\ (Bq)$$

On peut alors en déduire le pourcentage de diminution (D) du facteur de resuspension pour chaque composé radioactif. Les résultats sont présentés dans le tableau 5.

TABLEAU 5

| | | | Λ ($10^{-5}.s^{-1}$) | D (%) |
|---|---|---|---|---|
| Vent faible | témoin | $^{85}Sr$ | 62 | 94,8 |
| | avec solution 6 | $^{85}Sr$ | 3,2 | |
| | témoin | $^{134}Cs$ | 61,8 | 96,1 |
| | avec solution 6 | $^{134}Cs$ | 2,4 | |
| Vent fort | témoin | $^{85}Sr$ | 197 | 99,1 |
| | avec solution 6 | $^{85}Sr$ | 1,75 | |
| | témoin | $^{134}Cs$ | 191 | 98,6 |
| | avec solution 6 | $^{134}Cs$ | 2,5 | |

avec

$$D = \frac{\Lambda \text{témoin} - \Lambda \text{solution}}{\Lambda \text{témoin}}$$

La solution de décontamination selon l'invention permet de réduire notablement la remise en suspension des particules radioactives dès qu'elle est déposée sur le sol.

Cette solution de décontamination a donc un double rôle de protection lorsqu'elle est déposée et de décontamination lorsqu'elle est brossée.

## Revendications

1. Procédé de décontamination de la couche superficielle d'un sol (2) recouvert de particules polluantes (4), caractérisé en ce qu'il comprend les étapes consistant à :
   - mettre en solution une poudre micronisée de polyacrylamide anionique, réticulé, de formule générale :

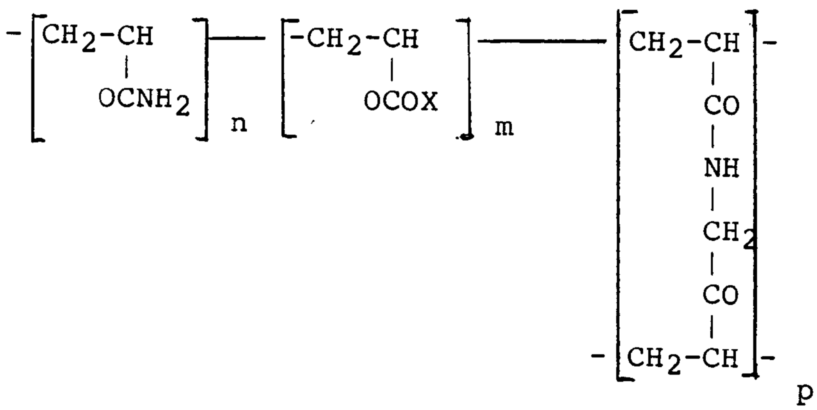

dans laquelle x représente le cation $Na^+$ ou $K^+$ et n, m et p les pourcentages respectifs de chaque maille élémentaire,
de façon à former une solution de décontamination (6),

- épandre cette solution de décontamination (6) par aspersion du sol à traiter (2),
- laisser sécher la surface traitée jusqu'à obtenir en surface un film de polyacrylamide sec (7),
- réhydrater le film (7) obtenu par aspersion d'eau (8), de façon à le ramollir, et
- récupérer la pellicule réhydratée formée par le film (7) de polyacrylamide lié aux particules de sol (2) et aux particules polluantes (4), grâce à des moyens de nettoyage.

**2.** Procédé de décontamination selon la revendication 1, caractérisé en ce que n est égal à 0,7, m à 0,3 et p à 0,0015.

**3.** Procédé de décontamination selon la revendication 1, caractérisé en ce que la solution de décontamination (6) est une solution saline à base de KCl ou de $NH_4OH$.

**4.** Procédé de décontamination selon la revendication 3, caractérisé en ce que la concentration en poudre de polyacrylamide est comprise entre environ 3 et 10% en masse pour une solution saline 0,5 M.

**5.** Procédé de décontamination selon la revendication 1, caractérisé en ce que la solution de décontamination (6) est aqueuse.

**6.** Procédé de décontamination selon la revendication 5, caractérisé en ce que la concentration en poudre de polyacrylamide est comprise entre environ 0,1 et 2 % en masse.

**7.** Procédé de décontamination selon la revendication 1, caractérisé en ce que le diamètre des grains de poudre de polyacrylamide est compris entre environ 50 $\mu$m et 200 $\mu$m.

**8.** Procédé de décontamination selon la revendication 1, caractérisé en ce que l'on asperge le sol à traiter (2) avec la solution de décontamination (6) de façon à avoir au moins 13 g environ de polyacrylamide par $m^2$ de sol (2) à décontaminer.

**9.** Procédé de décontamination selon la revendication 1, caractérisé en ce que les moyens de nettoyage sont des moyens de brossage.

**10.** Procédé de décontamination selon la revendication 9, caractérisé en ce que les moyens de brossage sont constitués par une balayeuse motorisée.

**11.** Procédé de décontamination selon la revendication 1, caractérisé en ce que les particules polluantes (4) sont des cations.

**12.** Procédé de décontamination selon la revendication 1, caractérisé en ce que les particules polluantes (4) sont des particules radioactives de césium ou de strontium ou un mélange des deux.

**13.** Procédé de décontamination selon la revendication 1, caractérisé en ce que les particules polluantes (4) sont des métaux lourds.

**14.** Solution de décontamination destinée notamment à être appliquée sur un sol pollué, caractérisée en ce qu'elle comprend une solution aqueuse ou saline d'une poudre micronisée de polyacrylamide anionique, réticulé, de formule générale :

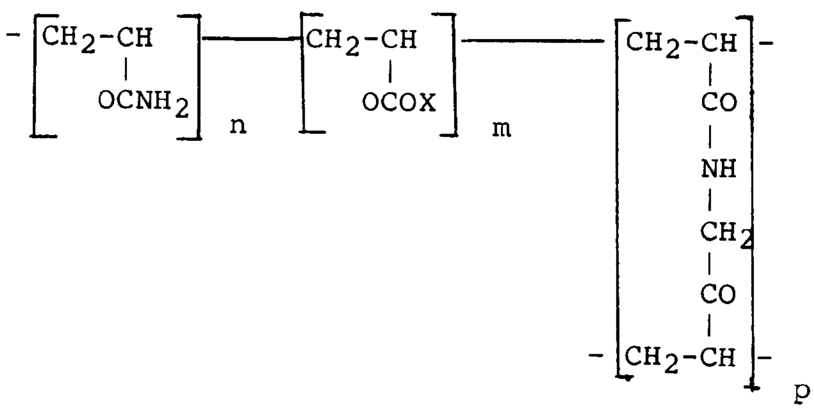

dans laquelle x représente le cation $Na^+$ ou $K^+$ et n, m et p les pourcentages respectifs de chaque maille élémentaire.

**15.** Solution de décontamination selon la revendication 14, caractérisée en ce que la solution de décontamination (6) est une solution saline à base de KCl ou de $NH_4OH$.

**16.** Solution de décontamination selon la revendication 15, caractérisée en ce que la concentration en poudre de polyacrylamide est comprise entre environ 3 et 10% en masse pour une solution saline 0,5 M.

**17.** Solution de décontamination selon la revendication 14, caractérisé en ce que la solution de décontamination (6) est une solution aqueuse.

**18.** Solution de décontamination selon la revendication 17, caractérisée en ce que la concentration en poudre de polyacrylamide est comprise entre environ 0,1 et 2% en masse pour une solution aqueuse.

**19.** Solution de décontamination selon la revendication 14, caractérisée en que n est égal à 0,7, m à 0,3 et p à 0,0015.

**20.** Solution de décontamination selon l'une quelconque des revendications précédentes, caractérisée en ce que le diamètre des grains de poudre de polyacrylamide est compris entre environ 50 µm et 200 µm.

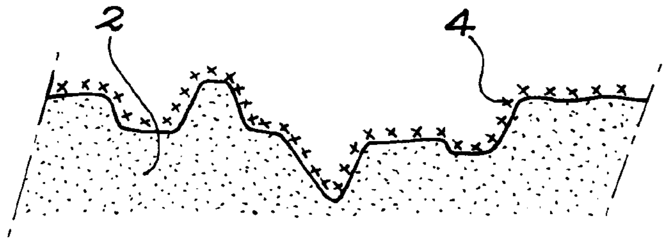


FIG. 1a

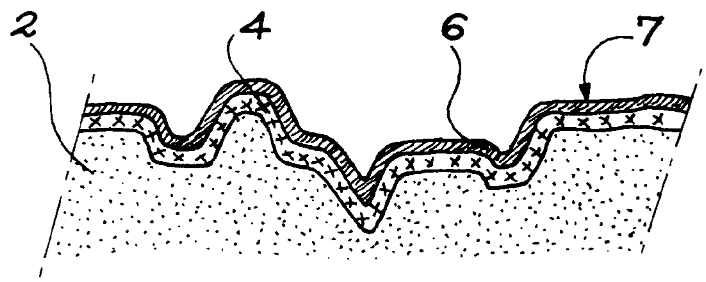


FIG. 1b

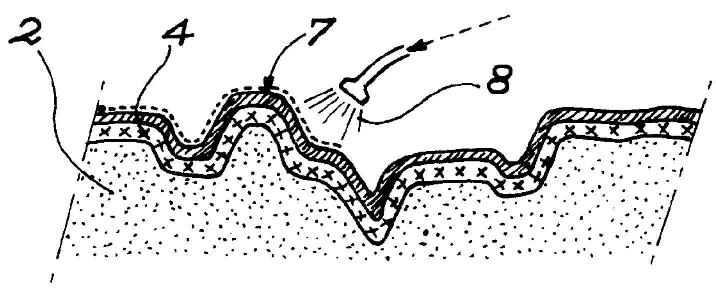


FIG. 1c

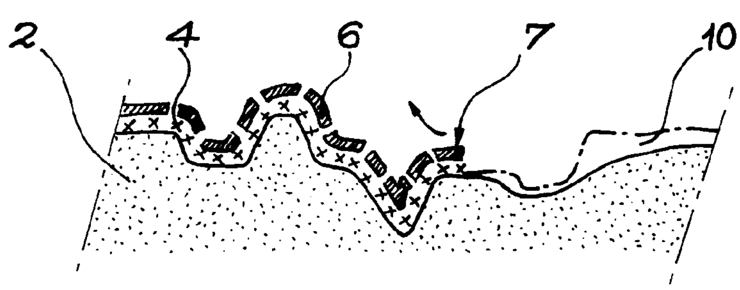


FIG. 1d

Office européen des brevets

# RAPPORT DE RECHERCHE EUROPEENNE

Numero de la demande

EP 93 40 0985

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 317 436 (SOLETANCHE)<br>* colonne 1, ligne 37 - ligne 43 *<br>* colonne 2, ligne 28 - ligne 43 *<br>--- | 1,9,10 | C09K3/32<br>G21F9/00 |
| Y | EP-A-0 060 314 (DEUTSCHE GESELLSCHAFT FÜR WIEDERAUFARBEITUNG VON KERNBRENNSTOFFEN)<br>* page 2, ligne 3 - ligne 10 *<br>* page 4, ligne 4 - ligne 24 *<br>--- | 1,9,10 | |
| Y | EP-A-0 047 857 (NUKEM)<br>* page 4, ligne 3 - ligne 26 *<br>* page 6, ligne 6 - page 7, ligne 16 *<br>--- | 1,5,12 | |
| Y | FR-A-1 303 673 (UNITED KIGDOM ATOMIC ENERGY AUTHORITY)<br>* colonne 1, ligne 19 - colonne 2, ligne 20 *<br>* résumé *<br>--- | 1,5,12 | |
| Y | GB-A-848 588 (E.E.GUNN)<br>* revendications 1-8 *<br>--- | 1,5,12 | **DOMAINES TECHNIQUES RECHERCHES (Int. Cl.5)** |
| A | EP-A-0 090 680 (SOCIETE LORRAINE DE PEINTURES)<br>* page 3, ligne 1 - ligne 35 *<br>----- | 1-20 | C09K<br>G21F |

Le présent rapport a été établi pour toutes les revendications

| Lieu de la recherche | Date d'achèvement de la recherche | Examinateur |
|---|---|---|
| LA HAYE | 01 JUIN 1993 | BOULON A.F.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)